Europäisches Patentamt

European Patent Office

Office européen des brevets

(11) Publication number: **0 139 249**
**B1**

(12) **EUROPEAN PATENT SPECIFICATION**

(45) Date of publication of patent specification: 02.05.90

(51) Int. Cl.⁵: **B 23 K 9/12**, B 23 K 9/16

(21) Application number: **84111468.9**

(22) Date of filing: **26.09.84**

(54) Hot-wire tig welding apparatus.

(30) Priority: 27.09.83 JP 177124/83
27.09.83 JP 177125/83
07.10.83 JP 186998/83
04.06.84 JP 113106/84
02.07.84 JP 135071/84

(43) Date of publication of application:
02.05.85 Bulletin 85/18

(45) Publication of the grant of the patent:
02.05.90 Bulletin 90/18

(84) Designated Contracting States:
BE DE GB SE

(56) References cited:
US-A-3 483 354
US-A-3 627 974

PATENT ABSTRACTS OF JAPAN, vol. 7, no. 55,
5th March 1983, page (M-198)(1200); JP-A-57-
202979 (MITSUBISHI) 13-12-1982

PATENT ABSTRACTS OF JAPAN, vol. 7, no. 44,
22nd February 1983, page (M-195)(1189); JP-A-
57-193280 (MATSUSHITA) 27-11-1982

(73) Proprietor: BABCOCK-HITACHI KABUSHIKI
KAISHA
6-2, 2-chome, Otemachi Chiyoda-ku
Tokyo 100 (JP)

(72) Inventor: Myoga, Toshiharu c/o Kure-
Kenkyusho
BABCOCK-HITACHI KABUSHIKI KAISHA
3-36, Takaracho Kure-shi (JP)
Inventor: Hori, Katsuyoshi c/o Kure-Kenkyusho
BABCOCK-HITACHI KABUSHIKI KAISHA
3-36, Takaracho Kure-shi (JP)
Inventor: Kawano, Shigeyoshi c/o Kure-
Kenkyusho
BABCOCK-HITACHI KABUSHIKI KAISHA
3-36, Takaracho Kure-shi (JP)
Inventor: Kondo, Yoshihide c/o Kure-Factory
BABCOCK-HITACHI KABUSHIKI KAISHA
6-9, Takaracho Kure-shi (JP)
Inventor: Kusano, Kazuki c/o Kure-Factory
BABCOCK-HITACHI KABUSHIKI KAISHA
6-9, Takaracho Kure-shi (JP)
Inventor: Takuwa, Toshiaki c/o Kure-Factory
BABCOCK-HITACHI KABUSHIKI KAISHA
6-9, Takaracho Kure-shi (JP)
Inventor: Kagawa, Takeshi c/o Kure-Kenkyusho
BABCOCK-HITACHI KABUSHIKI KAISHA
3-36, Takaracho Kure-shi (JP)

Courier Press, Leamington Spa, England.

(56) References cited:
PATENT ABSTRACTS OF JAPAN, vol. 7, no. 187, 16th August 1983, page (M-236)(1332); JP-A-58-86982 (ISHIKAWAJIMA HARIMA JUKOKYO) 24-05-1983

(72) Inventor: **Watanabe, Eiji c/o Kure-Kenkyusho BABCOCK-HITACHI KABUSHIKI KAISHA 3-36, Takaracho Kure-shi (JP)**

(74) Representative: **Patentanwälte Beetz sen. - Beetz jun. Timpe - Siegfried - Schmitt-Fumian Steinsdorfstrasse 10 D-8000 München 22 (DE)**

# EP 0 139 249 B1

**Description**

## BACKGROUND OF THE INVENTION

### FIELD OF THE INVENTION

The present invention relates to a hot-wire TIG welding (i.e. hot-wire inert-gas tungsten arc welding) apparatus of the kind referred to in the pre-characterizing portion of patent claim 1. Such an apparatus is known from US—A—3 627 974.

### DESCRIPTION OF THE PRIOR ART

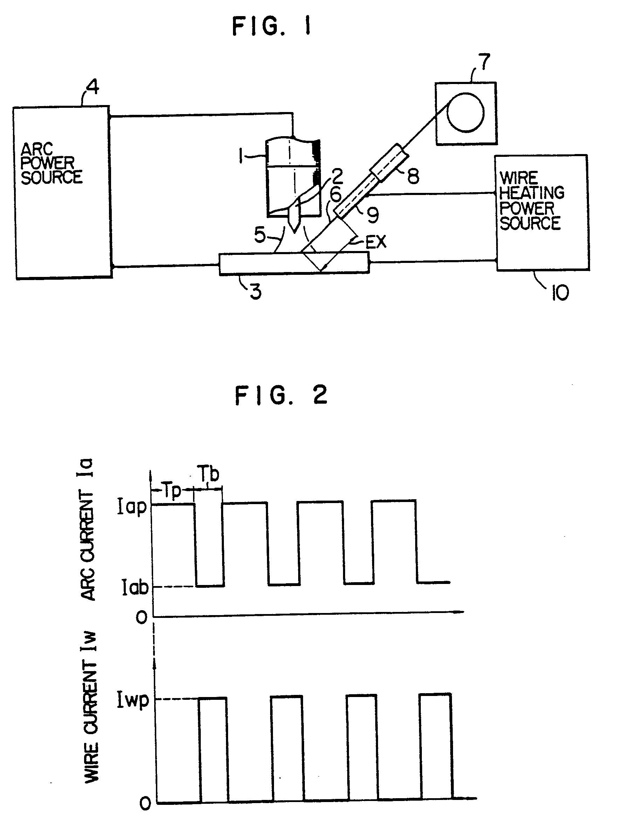

Fig. 1 shows a circuit arrangement of an ordinary welding apparatus of hot-wire TIG welding type.

An arc power source 4 for D.C. welding is connected to a tungsten electrode 2 in a TIG welding torch 1 and to a base metal 3 such that the tungsten electrode constitute a negative electrode, so that an arc 5 is formed in the atmosphere of argon shield gas. A wire 6 for welding is fed from a wire feeding device 7 through a conduit 8 and a contact tip 9 connected thereto, so as to be brought into contact with the portion of the base metal 3 in the area where the arc is formed. A D.C. or A.C. power source 10 for heating the wire is connected between the contact tip 9 and the base metal 3 so that an electric current flows through the wire 6 to generate Joule heat thus heating the wire 6 to promote the melting of the wire 6.

In this welding method, the amount of heat necessary for heating the wire from the room temperature to the melting temperature is a physical value which is determined by the material of the wire in case of neglecting the unavoidable heat loss which is usually rather small. For example, the amount of heat is 1270 Joule/g, when the wire is a mild steel. Therefore, the amount of heat necessary for melting the wire is determined if the wire feed speed is given, and the design is made fundamentally on the basis of this heat amount although a slight correction may be required to eliminate the influence of the heat radiated from the arc.

It is preferred, therefore, to use a wire heating power source of constant power type, capable of supplying constant power commensurate with the wire feed speed. Such a wire heating power source, however, has not been discussed hitherto as being actually difficult to realize and, as a compromise, a power source of a constant voltage type has been used as the wire heating power source 10, as proposed in the United States Patent no. 3,483,354. This power source relies upon a fact that the amount of heat produced in the wire is changed in proportion to the square of the voltage applied and in inverse proportion to the resistance value of the wire (i.e. (Applied voltage)$^2$/(Resistance value)).

The welding method employing such a wire heating power source, however, involves the following problems: Namely, the length Ex of the wire between the end of the contact tip 9 and the base metal (this wire length will be referred to as "extension", hereinunder) varies momentarily due to vertical oscillation of the welding torch or variation in inclination of the same during welding. In addition, the resistance value of the electric lines between the wire heating power source 10 and the contact tip 9 and the base metal is often innegligibly large as compared with the resistance value of the extension Ex of the wire between the contact tip 9 and the base metal 3. For these reasons, the welding using a constant voltage type wire heating power source could be carried out satisfactorily only through an aid of manual adjustment of the output voltage of the wire heating power source 10 which is conducted while watching the state of melting of the wire.

A difference between the demanded heat input and the actual heat input is inevitably caused due to a variation in the resistance value of the wire, setting error of the voltage applied, and so forth. When this difference is relatively small, this difference does not cause any substantial problem because it is absorbed by the change in the melting position, i.e., the position at which the wire merges in the weld puddle and/or by a plastic deformation of the hot softened end portion of the wire. However, when this difference becomes relatively large, various troubles are experienced such as a stabbing of the base metal by the wire in the rigid state or formation of arc due to separation of the wire end from the base metal as a result of melting of the wire in the state of being short of the feed of the wire. These troubles are quite apt to occur particularly when the wire melting speed is 20 g/min or higher.

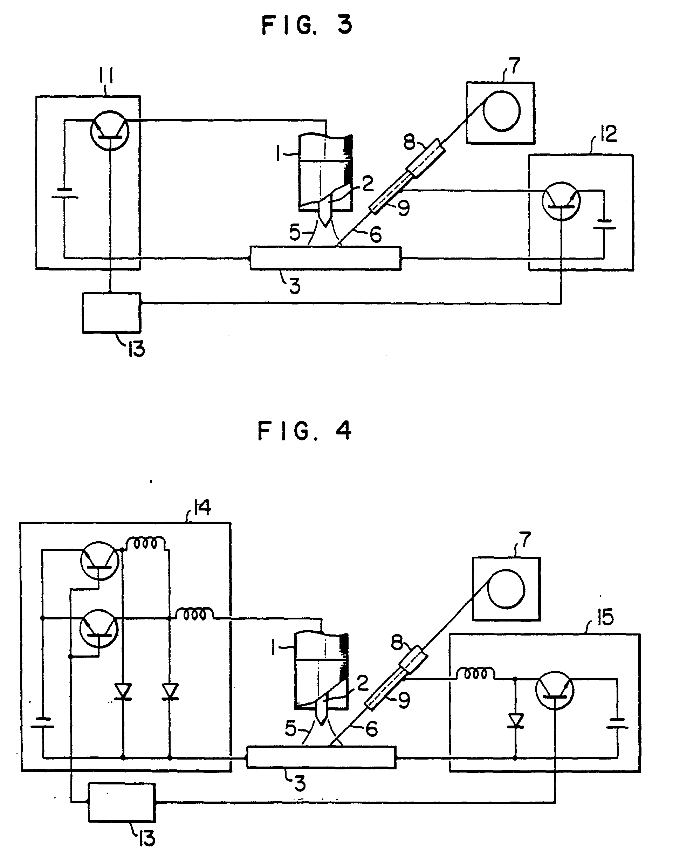

It is known that, in hot-wire TIG welding, a magnetic interference is caused between the wire heating current and the arc current, particularly when the wire heating current is increased, resulting in a disturbance in the arc due to a phenomenon called "magnetic blow" hindering the welding undesirably. As a countermeasure for obviating this problem, US—A—3,627,974 discloses a hot-wire TIG welding method in which the "magnetic blow" is eliminated by effecting a switching of electric currents such that the electric power supply to the wire is suspended when the arc current is being supplied and the supply of the arc current is suspended when the power is being supplied to the wire. This method, however, has not been put into practical use due to lack of stability in the TIG arc. In another proposal referred to as "hot-wire switching TIG welding method", the arc current and the wire heating current are supplied alternatingly in a manner shown in Fig. 2. More specifically, in this method, the wire heating current Iw is not supplied in the period Tp in which the arc current takes it peak value Iap but the supply of the wire heating current Iw is conducted only in the period Tb in which the arc current takes a base value Iab which is very low, so that the "magnetic blow" is substantially eliminated. This hot-wire switching TIG welding method, however, requires a dropper-type power supply employing transistors of large capacities or a chopper-type power supply which also employ transistors of large capacities. These power supplies are generally expensive

3

and large in size. Fig. 3 shows an example of a dropper-type power supply for the hot-wire switching TIG welding. This power supply is constituted by an arc power source 11 and a wire heating power source 12 which make use of transistors of large capacities in the form of variable resistors for controlling the arc current and the wire heating current, as well as a synchronous controller 13 for effecting the switching of the power supply. On the other hand, Fig. 4 shows an example of chopper-type power supply which is large in size and complicated in construction due to the use of transistors of large capacities as the switching elements and the use of reactor and fly-wheel diode for the purpose of current control in the arc power source 14 and the wire heating power source 15.

This welding method, however, still requires a manual adjustment of the output power of the power supply despite the use of the expensive and high-grade power source, because the control relies upon a simple method to maintain the wire heating voltage constant in relation to the wire feeding speed, which method cannot provide delicate automatic control of power when there is caused a difference between the power actually supplied to the extension Ex and the power actually demanded, due to fluctuations of factors such as the length of the extension Ex, time ratio of arc current and wire heating current Tp/(Tp + Tb) and so on, with the result that manual control has become necessary during welding in the conventional welding method.

## SUMMARY OF THE INVENTION

In view of the above, the present invention aims as its primary object to provide a hot-wire heating control apparatus which can optimumly control the wire heating current in response to a wide variation in wire feeding speed and welding conditions, as well as a low cost power supply for hot-wire TIG welding.

This object is achieved with a hot-wire heating control apparatus as claimed in claim 1. Dependent claims 2 to 9 are directed on features of preferred embodiments of the hot wire control apparatus according to the invention.

## BRIEF DESCRIPTION OF THE DRAWINGS

Fig. 1 is an illustration of a conventional ordinary hot-wire TIG welding apparatus;

Fig. 2 is an illustration of the principle of conventional hot-wire TIG welding methods as a prior art;

Figs. 3 and 4 are illustrations of a conventional hot-wire TIG welding apparatus as a prior art;

Fig. 5 shows in a diagram the relationship between the wire heating electric power and the wire melting rate in hot-wire TIG welding;

Fig. 6 is a flow chart showing the arrangement of the wire heating controller in accordance with the invention;

Fig. 7 is an illustration of a hot-wire switching TIG welding apparatus of the invention;

Fig. 8 is an illustration of the operation of the hot-wire TIG welding apparatus shown in Fig. 7;

Fig. 9 shows another example of hot-wire TIG welding apparatus in accordance with the invention;

Fig. 10 is an illustration of an embodiment of the invention;

Fig. 11 shows another example of a hot-wire switching TIG welding apparatus in accordance with the invention;

Fig. 12 is an illustration of the operation of the apparatus shown in Fig. 11;

Fig. 13 is an illustration of an embodiment of the invention;

Fig. 14 is another example of the hot-wire switching TIG welding apparatus in accordance with the invention;

Fig. 15 is an illustration of the operation of the welding apparatus shown in Fig. 14; and

Fig. 16 is a chart showing waveforms of electric currents, for illustrating the operation of still another embodiment of the welding apparatus according to the invention.

Fig. 17 is still another embodiment of the hot-wire switching TIG welding apparatus according to the invention.

## DESCRIPTION OF THE PREFERRED EMBODIMENTS

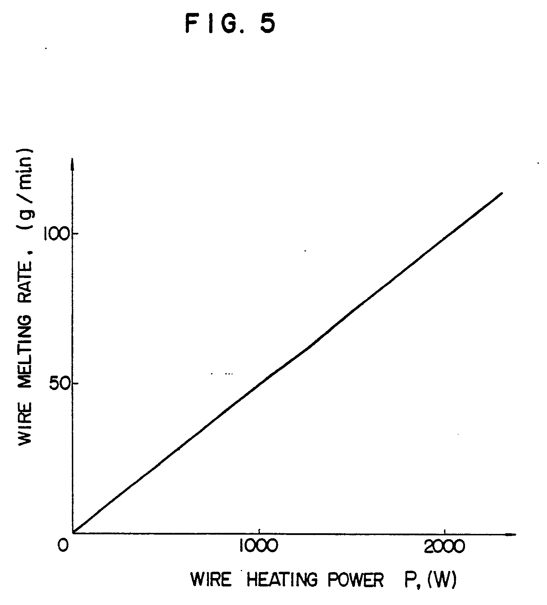

An experiment was conducted to examine the relationship between the wire heating electric power and the wire melting rate, by applying the wire heating current in the form of pulses of waveform as shown in Fig. 2 to a mild steel wire of of 1.2 mm dia., without supplying the arc current. The result of this experiment is shown in Fig. 5. When a point on the wire is subjected to 4 or more consecutive heating current cycles before this point travels through the length of the wire extension Ex, the condition of heating of the wire can be regarded materially as being a continuous heating. It was confirmed that the wire melting rate is increased linearly in direct proportion to the wire heating electric power, regardless of the conditions such as the peak values of the currents, time ratio of the current supply, and frequency (4 to 200 Hz), provided that the above-mentioned condition for the heating cycle is met.

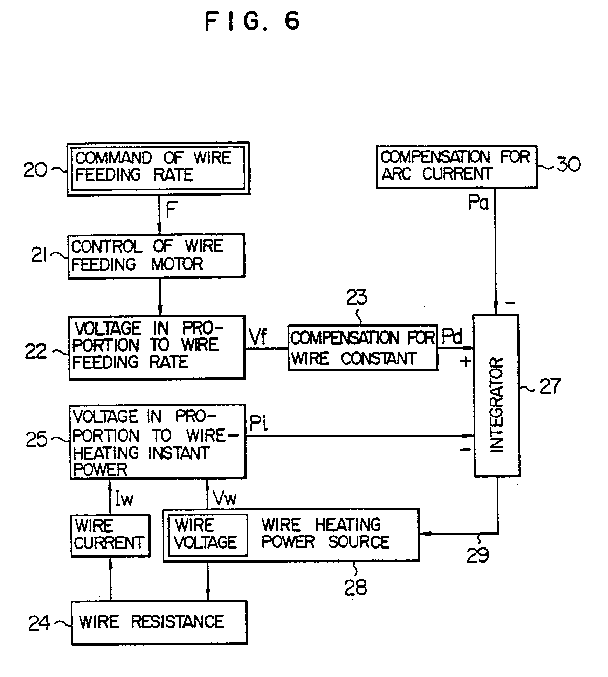

Fig. 6 is a flow chart of a practical example of a wire heating controller in accordance with the invention. This arrangement is to realize quite easily a hot-wire TIG welding by a suitable combination of a wire feeding device 7 and a wire heating power source 10 of the type incorporated in the hot-wire TIG welding apparatus schematically shown in Fig. 1. In the hot-wire TIG welding, it is desirable that the melting of the base metal is basically controlled by varying the TIG arc current while the amount of deposited metal is controlled by adjusting the wire feed speed irrespectively of the arc current. According to the invention, the control of the melting of the base metal and the control of the amount of the deposited metal are achieved in a manner which will be explained hereinunder with reference to Fig. 6.

Referring to Fig. 6, as the first step of the operation, the operator who conducts the welding inputs a wire feed speed instruction in a step 20, so that the rotation rate of a wire feed motor is controlled in a step 21 to realize the inputted wire feed speed. Then, in a step 22, a voltage Vf proportional to the motor speed is determined and this voltage is multiplied in a step 23 by a correction factor which is determined by the diameter and material of the wire, thus obtaining a voltage Pd which is proportional to the required power. This voltage is applied as a positive voltage signal to an integrator 27 for the purpose of comparison. On the other hand, the momentary value of the wire heating electric power is measured as the product of the wire current Iw and the wire voltage Vw which is detected as the potential difference between the base metal and the contact tip 9, and a voltage Pi proportional to the thus determined momentary heating power is applied as a negative voltage to the integrator 27. When a more delicate control is required, a voltage Pa in the form of a negative signal is applied to the integrator 27 for making a correction 30 to take into account the influence of the radiation heat of the arc upon the wire.

The integrator 27 has a time constant which is 3 times or more times larger than the period of switching between the arc current and the wire heating current, and is adapted to supply a control voltage signal 29 to the wire heating power supply 28 such that the value (Pd-Pi) or (Pd-Pi-Pa) standardized by the operation thereof becomes zero. As a result of this feedback control of the output voltage from the wire heating source 28, a wire heating power commensurate with the wire feed speed is maintained automatically. The detection of the wire heating electric power is practically effected by applying the magnetic field of the wire current and the wire terminal voltage to a hall device and picking up from the hall device an output voltage proportional to the momentary electric power.

When a D.C. welding heating power source 10 as shown in Fig. 1 is used, this wire heating controller can be used in such a way as to effect a feedback control of the output voltage so as to change the electric current supplied to the wire. In this ordinary hot-wire TIG welding, the peak value of the wire current is preferably maintained as low as possible, in order to minimize the magnetic blow of the arc. The wire heating controller as shown in Fig. 6 can be used for the purpose of controlling the amplitude of the wire current during the addition of power to the wire, when a hot-wire switching TIG welding power source is shown in Fig. 3 or 4 is used.

It is to be noted, however, a practical power source of a much reduced cost can be realized by making an effective use of the characteristic feature of the hot-wire switching TIG welding power supply. Namely, in the case of the hot-wire switching TIG welding, the addition of power to the wire is conducted only in the period of supply of base arc current. Therefore, even if the wire heating current is increased to such a peak level as causing the tendency of the magnetic blow, no substantially intolerable influence is caused because the arc current in this base arc current period is so small as not to materially affect the rate of melting of the base material. Thus, in the hot-wire switching TIG welding, the peak value of the wire heating current does not materially affect the welding operation and, therefore, the welding can be conducted with a sufficiently high peak-level of the wire heating current.

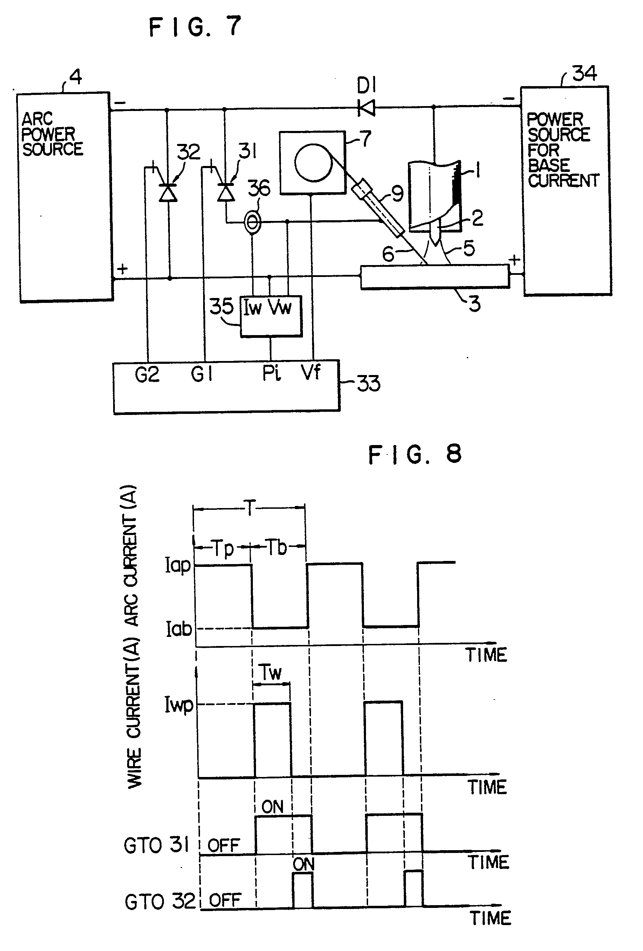

Fig. 7 shows an embodiment of the invention in which the wire heating current has a considerably high peak-level so that the wire heating electric power can be controlled by varying the time duration of supply of the wire heating current. More specifically, in this embodiment, a hot-wire switching welding apparatus is constructed by combining a welding power source 4 having a constant- current characteristic as used in ordinary TIG arc welding, gate turn-off thyristors GTO31, GTO32 as the switching elements of large current, and a wire heating controller 33 in accordance with the invention. The wire heating power is detected by a wire power detector 35 which receives both the output from a sensor 36 employing a hall device and the wire voltage. A base arc current Iab is set by a base current power source 34 while the peak current Iap of the arc is formed by adding in an overlap state the base current to another current fed from the power source 4. A symbol D1 represents a checking diode for preventing inverse flow of electric current so as to separate the wire current circuit from the power source 34. This apparatus operates in a manner explained hereinunder with reference to Fig. 8. Namely, in the period Tp in which the peak current is applied, the GTO 31 and GTO 32 are turned off so that the peak arc current Iap flows between the tungsten electrode 2 and the base metal 3. However, when the period Tb in which only the base current is supplied is commenced, the GTO 31 is first turned on so that all part of the output current from the power source 4 is supplied to the wire 6. At a moment Tw thereafter, the GTO 32 is turned on to short-circuit the output current of the power source 4, thus reducing the wire current to 0 (zero). Then, after completion of the base period Tb, both the GTOs 31 and 32 are turned off to resume the initial condition. The supply of the base current to the arc 5 is made by the base current power source 34 through the operation of the diode D1. In this case, since the power source 4 of constant-current type is used, the peak value of the wire heating current is almost equal to the arc current, so that the wire heating electric power is controlled through the control of time duration of supply of the wire heating current. Namely in this case, the GTO 31 and GTO 32 are controlled to realize a time duration Tw of electric power supply to the wire which time duration Tw is determined to provide an electric power which is commensurate with the wire feed speed, by making use of the wire heating controller 33 of the invention while taking into account the output signal from the wire heating electric power detector 35. When the wire voltage Vw in the extension Ex of the wire between the contact tip 9 and the base metal 3 is higher than 9V, the incidental electric current is supplied to the arc even from the arc

5

power source 4 so that the control of the base arc current becomes difficult. The wire voltage exceeds 9V, when a wire melting rate of is not less than 40 g/min in a case of about 30 mm regarding the extension Ex value. Thus, when the wire melting rate is less than 40 g/min, this embodiment can be used practically satisfactorily. Table 1 shows an example of conditions of welding conducted by the described embodiment of the welding apparatus.

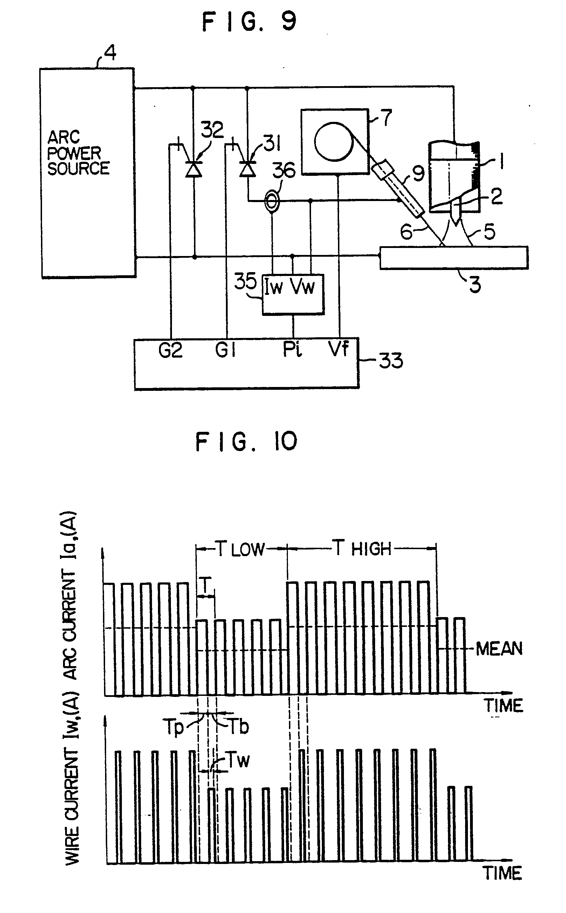

Fig. 9 shows a circuit arrangement of a hot-wire switching TIG welding apparatus which employs a more simplified form of the circuit than that shown in Fig. 7. When the switching frequency of the arc is high, the period of supply of base current is correspondingly short, but the arc is sufficiently stabilized even when the base current power source 34 and the diode D1 shown in Fig. 7 are removed, provided that the period of supply of base current is about 50 ms or shorter. This is because the tungsten electrode can be maintained at temperatures high enough to maintain the emission of the thermoelectron with the result that re-arcing is readily possible. However, if the base current power source 34 and the diode D1 are removed, the arc receives a voltage which is the sum of the wire voltage between the contact tip 9 and the base metal 3 and the voltage drop across the GTO 31 or, when the GTO 32 has been turned on, the voltage drop across the GTO 32. In this case, therefore, a base current not greater than 50A flows in the period Tb of the base current. In order to prevent any excessive rise of the arc current during in the period of supply of the base current, it is necessary that the wire voltage be maintained at 9V or less.

A method called low-pulse TIG welding method is used in order to prevent any dripping of the molten metal in, for example, all-position welding on a fixed pipe. Fig. 10 schematically shows the waveform of electric current used in a low-pulse TIG welding conducted by means of the circuit as shown in Fig. 9. Table 2 shows the conditions of welding employed in this embodiment of the invention. The low-pulse (that is, the cycle of repetition of $T_{Low}$ and $T_{HIGH}$ shown in Fig. 10 is low) current is supplied by a welding power source 4 in the circuit as shown in Fig. 7 and this output from the power source 4 is supplied alternatingly to the arc and the wire by means of the GTOs 31 and 32 explained in Fig. 8. In this embodiment, the detection of the wire heating electric power is conducted by using a wire heating electric power detector 35 and the time duration Tw of supply of the wire heating current is determined and controlled in such a manner as to provide the wire heating electric power which is commensurate with the wire feeding speed. When the wire is fed at a constant speed, since the peak value Iwp of the wire current in the LOW peak current period is low, the time duration Tw (shown in Fig. 10) of the supply of the wire heating power is longer than that in the high peak current period. Due to the reasons stated above, according to the invention, the wire can be continuously heated and melted advantageously even when the welding is conducted by low-pulse TIG welding with a constant wire feed speed. If the period of peak arc current is 60% of the whole period of arc current supply, it is possible to obtain a practically satisfactory wire melting rate of 20 g/min even in the LOW peak current period as will be seen from Table 2, provided that the mean arc current throughout the LOW peak current period is at least 120A. In the case of the application of the low-pulse to the hot-wire switching TIG welding, if the switching frequency of the hot-wire switching TIG is made too low, the cycle of switching undesirably disturbs the periodical solidification of the molten metal which takes place by a phenomenon called "lapping effect" which periodical solidification is brought about by the application of the low pulse. In order to ensure an attractive appearance of the wire bead through elimination of the lapping effect, it has been necessary to select the switching frequency of the hot-wire switching TIG to be on the order of 10 Hz or higher. On the other hand, when the cycle of the low-pulse repetition is 5 Hz or higher, the periodical solidification cannot be obtained satisfactorily due to thermal inertia of the molten metal, so that the solidification state becomes not different from that of continuous solidification, thus nullifying the merit of the use of the low pulse repetition. Therefore, the use of the switching current waveform as shown in Fig. 10 produces a remarkable effect only when the frequency of the repetition of the low-pulse is 4 Hz or lower. In the case, therefore, it suffices only to produce the low-pulse current from a welding power source 4 in the circuit as shown in Fig. 9. It is possible to obtain a practically sufficient wire melting rate of 20 g/min even in the LOW peak current period, provided that the mean arc current in the LOW peak current period is about 120 A or greater. In some cases, the shape of the bead is impaired if the wire is fed at an same speed during the LOW peak current period. In such case, it is advisable to conduct a so-called "pulse-feed" in which the wire feed speed is reduced in the LOW period. In this pulse feed, needless to say, the wire heating electric power is varied in accordance with variation in the wire feed speed.

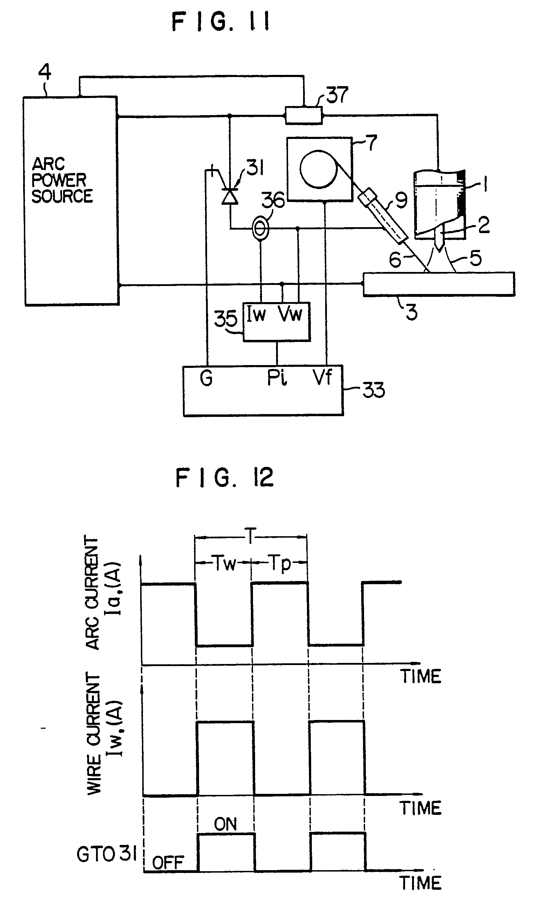

Fig. 11 shows a circuit in which the GTO 32 has been removed from the circuit as shown in Fig. 9. In this case, the output current from the arc power source 4 is made to branch to the wire 6 as the GTO 31 is turned on, with the result that the arc current is decreased and forcibly becomes one in the period of the base current. The period of supply of the electric power to the wire is determined and controlled by the wire heating controller 33 which operates with reference to the output signal from the wire heating electric power detector 35. The state of melting of the base metal 3 is generally determined by the mean arc current. In this case, therefore, the arc current is detected by means of a shunt 37 and the output of the arc current power source 4 is controlled such that the mean value of the arc current is maintained constant. Fig. 12 shows the waveform of output current from the circuit shown in Fig. 11. It is possible to control the period Tw of power supply to the wire while fixing the switching period T. Alternatively, it is also possible to control the period Tw while fixing the peak current period Tp of the arc current.

The circuits shown in Figs. 7, 9 and 11 brings about such advantage that a relatively low cost hot-wire switching can be obtained by adding a switching unit composed of low cost large-current switching elements such as GTO to a conventionally used low cost welding power supply for TIG welding. Unfortunately, however, these circuits cannot provide a wire melting rate exceeding 40 g/min because the wire voltage Vw is limited to 9V or lower.

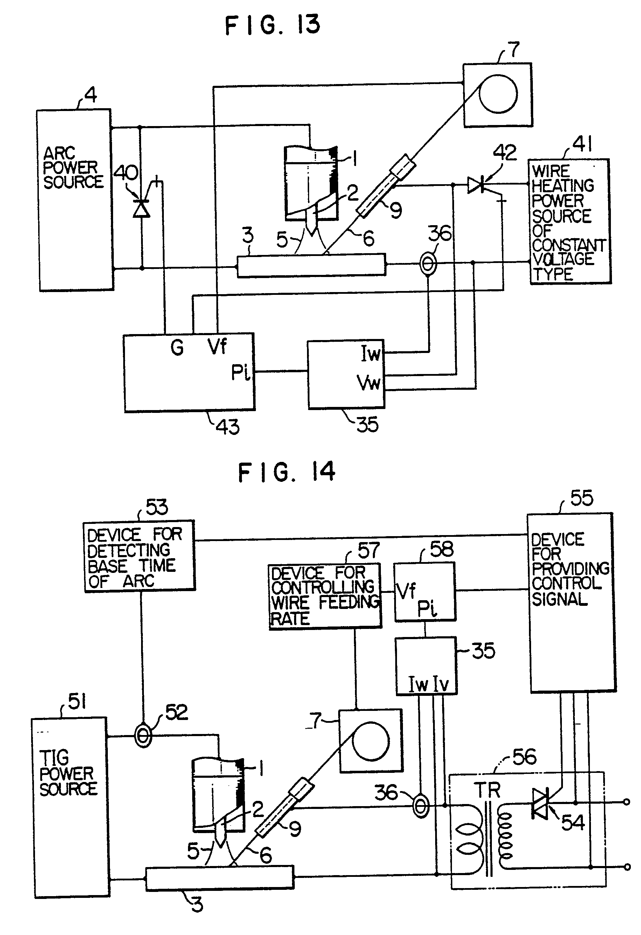

Fig. 13 shows an arrangement in which the arc power source and the hot-wire heating power source are provided separately. In this case, the arc power source is constructed by an ordinary arc power source 4 for TIG welding and a GTO 40 connected to the output terminal of the arc power source 4 in parallel with the arc 5. On the other hand, the wire heating power source is constituted by a constant-voltage type welding power source 41 with a GTO 42 being connected to the output terminal thereof in series to the wire 6 which is the load. The peak period and base period of the arc current are determined by turning on-and-off of the GTO 40. Making reference to the output signal from the wire heating power detector 35, the controller 43 controls the on-period of the GTO 42 within the base period such that a wire heating electric power commensurate with the wire feed speed Vf is obtained. According to this arrangement, it is possible to control the wire heating current and the arc current independently of each other. In a case of such constitution, a high wire melting rate of 100 g/min could be obtained by using a rather high voltage of wire heating power source 41 such as 20V or so.

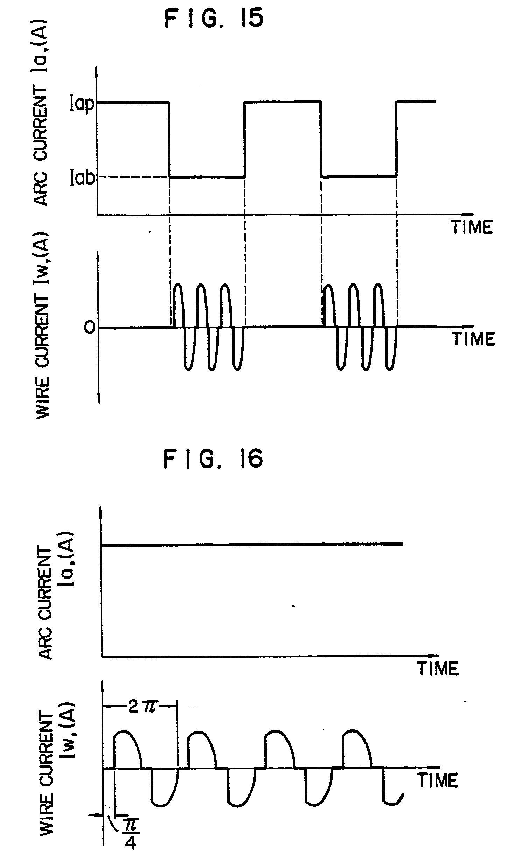

Fig. 14 shows another embodiment of the invention which employs a control of the time duration of the supply of the wire heating current in such a way as to provide a wire heating electric power commensurate with the wire feed speed. This embodiment employs quite a low cost wire heating power source 56 equipped with a transformer TR having a TRIAC (triode A.C. switch) 54 in the primary side thereof. The TIG arc 5 was formed by a commercially available low-pulse TIG power source 51. The base period of the arc is detected by a base period detector 53 which receives the signal from an arc current detector 52, and the TRIAC 54 is turned on by the control signal providing device 55 only during the base period. The wire feed speed controller 57 is adapted to control the wire feed speed and to deliver to a wire heating power controller 58 a voltage Vf proportional to the wire feed speed. The wire heating power controller 58 is adapted to control the phase of electric power supply to the TRIAC 54 by comparing the output signal from the wire heating power detector 35 and the voltage Vf proportional to the wire feed speed. Fig. 15 shows the waveform of the output current from this circuit. In order to prevent magnetic flux from being distributed locally regarding the transformer TR in the wire heating power source 56, the control signal providing device 55 of the TRIAC 54 employs the same number of positive half waves and negative half waves, and the power supply to the wire is made only during the base period. A high wire melting rate of 40 g/min was obtained by this welding apparatus. In the case of a low wire melting rate of 10 g/min, the arc welding could be executed without substantial problem even by continuous supply of arc current and wire heating current as shown in Fig. 16. This will be attributable to the following fact.

Namely, when the supply of electric current to the wire is made through the TRIAC, although the "magnetic blow" occurs, the arc returns to the position just under the tungsten electrode 2 at interval of a pause of power supply existing per every half cycle. It was confirmed that a high rigidity of the arc can be obtained as compared with the heating of the wire by a mere D.C. or A.C. current, when the above-mentioned interval of the pause of power supply is π/4 radian or greater.

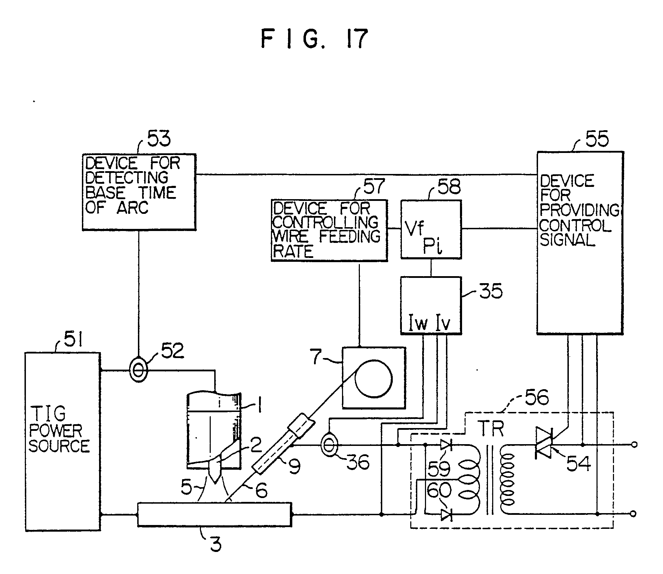

Fig. 17 shows still another embodiment of the invention, in which rectifiers 59, 60 are provided at the secondary side of a transformer for a wire heating power source as shown in Fig. 14 so as to effect full wave rectification regarding the output power for wire heating current. In the construction shown in Fig. 14 there is caused such a case that current flows from the wire 6 to the tungsten electrode 2 if the wire is not in contact with the base material. However, as shown in Fig. 17, if the rectifiers 59, 60 are disposed such that the voltage polarity at the side of the wire conforms to the voltage polarity at the side of a tungsten electrode 2, there is obtained such effect that current is prevented from flowing from the wire 6 to the tungsten electrode 2 when the wire is not in contact with the base material.

## MODIFICATIONS OF INVENTION

Although the invention has been described through specific embodiments in which elements of GTO are used as the large-current switching means, these GTO elements can be obviously substituted by large-current transistors. It will be obvious also that the TRIAC used as the A.C. switching element can be substituted by an SCR (thyrister) connected in an inversed parallel manner (that is, disposition in parallel while reversing the direction of the flow of current).

## ADVANTAGES OF THE INVENTION

The invention offers the following advantages:

1. According to the invention, low cost and small-sized electronic circuits are realized for the detection of the electric power and the power control, so that the heating of the hot wire can be controlled without any dependency on the waveform and peak value of the current and voltage of the electric power for heating the wire. This in turn permits the use of switching elements which handle large electric and provides various practical measures for reducing the cost and size of hot-wire switching TIG welding power source which hitherto has been generally expensive and large in size. For instance, in the circuit shown in Fig. 9, a hot-wire switching TIG welding apparatus could be obtained merely by adding a simple GTO switching unit to a conventional TIG power source.

# EP 0 139 249 B1

2. Since a wire heating electric power commensurate with the wire feed speed is always obtained, the operator can change the wire feeding speed as desired without making any additional adjustment of the wire heating current.

3. Changes in the factors during the welding, such as a change in the length of the extension Ex, a resulting change in the resistance value of the wire, and a change in the voltage drop in the electric lines between the power source and the contact tip 9 can be automatically compensated for, so that the welding can be conducted with a high stability. In addition, undesirable leaving of a solid softened wire in the weld metal, which has been often experienced in the conventional hot-wire TIG welding particularly when the wire heating power is relatively small in comparison with the wire feed speed, can be eliminated almost perfectly.

## Table 1

| arc peak current    Iap | 200A |
|---|---|
| arc base current    Iab | 50A |
| current supply time ratio Tp/T | 0.7 |
| Tw/T | 0.2 |
| switching frequency | 60 Hz |
| wire material | mild steel |
| wire diameter | 1.2 mm |
| wire melting rate | 14 g/min |

8

EP 0 139 249 B1

## Table 2

| switching frequency | 1/T | 70Hz |
|---|---|---|
| current supply time ratio | Tp/T | 0.6 |
| | Tw/T | 0 to 0.4 |
| High Peak Current Period: | | |
| peak current Iaph | | 250A |
| base current Iab | | 50A |
| mean arc current I mh | | 170A |
| period | T high | 0.3 sec |
| Low Peak Current Period: | | |
| peak current Iapl | | 167A |
| base current Iab | | 50A |
| mean arc current I ml | | 120A |
| period | T low | 0.2 sec |
| wire material | | mild steel |
| wire diameter | | 1.2 mm |
| wire melting rate | | 0 to 20 g/min |

## Claims

1. A hot-wire TIG welding apparatus comprising an electric power source (4; 51) for providing a TIG arc, another electric power source (28; 41; 56) for feeding a wire-heating electric current to a wire by effecting alternatingly both the feed and pause of electric power so as to heat the wire, a TIG arc torch (1), and means (7; 7 and 57) for feeding wire, characterized by control means having:
   means (22 and 23; 43; 58) for providing an electric signal proportional to a feed speed of the wire;
   detecting means (25; 35, 36 and 43; 35, 36 and 58) for detecting wire electric current and wire voltage to detect wire-heating instantaneous electric power, said detecting means providing an electric signal corresponding to the detected instantaneous wire-heating power; and
   comparing-and-controlling means (27, 43, 55 and 58) and a switching element (31, 42 and 54) provided in a circuit of wire-heating electric power feed, said comparing-and-controlling means comparing the electric signal of the wire-heating instantaneous electric power with the electric signal proportional to the feed speed of the wire so as to control the time duration of electric power fed through the switching element on the basis of the result of the comparing so that the wire-heating electric power corresponds to the feed speed of the wire, the feed of wire heating current is paused when the arc current reaches a peak level, the wire heating current being fed when the arc current becomes a base level, the time duration of feed of the wire heating current being not longer than the time duration of the arc base current.

9

2. A hot-wire TIG welding apparatus according to claim 1, wherein the comparing-and-controlling means (27, 33 and 58) includes an averaging circuit for averaging the electric signal of the wire-heating instantaneous electric power by use of a time constant not less than three times of the switching period of the switching of the wire-heating current.

3. A hot-wire TIG welding apparatus according to the claim 1 wherein the electric power source (4, 51) for providing a TIG arc provides an output of pulsed arc current, a switching being effected between the electric power source of the TIG arc and the wire-heating power source (28, 41 and 56), the comparing-and-controlling means making the switching element turn off the wire-heating current feed when the arc current is of a peak level, said comparing-and-controlling means controlling the time duration of electric power fed through the switching element only when the arc current is of a base level.

4. A hot-wire TIG welding apparatus according to claim 1, wherein said switching circuit effects a continuous switching of 10 Hz or more in frequency between the arc current and the wire heating electric current, said switching circuit comprising means for periodically changing an average arc current at a frequency not higher than 4 Hz.

5. A hot-wire TIG welding apparatus according to claim 1, wherein the switching element is a semiconductor A.C. switch (54) for effecting control of the phase of supply of the wire heating electric power, said comparing-and-controlling means controlling the semiconductor A.C. switch so that electric power supply of a period less than $3\pi/4$ is provided with respect to each half wave of the wire-heating electric current.

6. A hot-wire TIG welding apparatus according to claim 5 further comprising means (59, 60) for effecting rectifying all waves of wire-heating current into wire-heating direct current.

7. A hot-wire TIG welding apparatus according to the claim 1, wherein a common electric power source is used for both the wire-heating electric power source and the electric power source of TIG arc, a circuit being provided which is connected in parallel to the TIG arc torch and in which circuit the switching element (31) is connected in series to the wire, said comparing-and-controlling means (33) making the switching element be periodically turned on per each of a cycle (T) to thereby branch the output electric current to the wire, said comparing-and-controlling means controlling the time duration (TW) of the branched wire-heating current so that the wire-heating electric power is controlled.

8. A hot-wire TIG welding apparatus according to claim 7, wherein the apparatus is used in combination with a feed-back controller adapted to effect a feedback of the output current from said constant-current type welding power source in such a way as to provide a constant mean arc current.

9. A hot-wire TIG welding apparatus according to claim 7, further comprising another switching element (32) provided in parallel to the TIG arc torch, the comparing-and-controlling means (33) making the first switch element (31) be periodically turned on to thereby branch the output electric current to the wire and then making the second switching element (32) be turned on to thereby pause the electric power feed to the wire so that the time duration of wire-heating electric power feed is controlled.

## Patentansprüche

1. Vorrichtung zum WIG-Schweißen mit erwärmtem Zuführdraht bestehend aus
einer elektrischen Leistungsversorgung (4; 51) zur Versorgung eines WIG-Lichtbogens;
einer weiteren elektrischen Leistungsversorgung (28; 41; 56) zur Zuführung eines drahterwärmenden elektrischen Stroms zu einem Draht, um alternativ die Versorgung mit und Unterbrechung von elektrischer Leistung zu bewirken, um den Draht zu erwärmen;
einem WIG-Lichtbogenbrenner (1); und
einer Vorrichtung (7; 7 und 57) für die Zuführung des Drahtes; gekennzeichnet durch eine Regelvorrichtung, die aufweist:
eine Vorrichtung (22 und 23; 43; 58), die ein elektrisches Signal proportional zur Zuführungsgeschwindigkeit des Drahtes, erzeugt;
eine Meßvorrichtung (25; 35, 36 und 43; 35, 36 und 58) zum Messen des elektrischen Stroms und der elektrischen Spannung des Drahtes zur Bestimmung der den Draht erwärmenden momentanen elektrischen Leistung, wobei die Meßvorrichtung ein der momentanen elektrischen Heizleistung entsprechendes elektrisches Signal liefert,
eine Vergleichs- und Regelvorrichtung (27, 43, 55 und 58) sowie ein Schalterbauteil (31, 42 und 54), das in die, den Draht mittels elektrischer Leistungszufuhr erwärmende Schaltung, eingesetzt ist, wobei die Vergleichs- und Regelvorrichtung das elektrische Signal der den Draht erwärmenden momentanen elektrischen Leistung, mit den der Zuführungsgeschwindigkeit des Drahtes entsprechenden Signal vergleicht, um so die Zeitdauer der elektrischen Leistungszufuhr durch das Schalterbauteil, auf der Grundlage des Ergebnisses des Vergleichs zu regeln, so daß die den Draht erwärmende elektrische Leistung der Zuführungsgeschwindigkeit des Drahts entspricht; wobei die Zufuhr des den Draht erwärmenden Stroms unterbrochen wird, wenn der Schweißstrom einen Maximalwert annimmt, der den Draht erwärmende Strom wird zugeführt, wenn der Schweißstrom einen Minimalwert annimmt, und wobei die Zeitdauer der Zufuhr des den Draht erwärmenden Stroms nicht länger als die Zeitdauer des Schweißbasisstroms ist.

2. WIG-Schweißapparatur mit erwärmten Zuführdraht nach Anspruch 1, dadurch gekennzeichnet, daß die Vergleichs- und Regelvorrichtung (27; 33 und 58) eine Mittelungsschaltung aufweist, um das elektrische Signal, der den Draht erwärmenden momentanen elektrischen Leistung, unter Verwendung einer Zeitkonstanten, die nicht kleiner ist als das 3-fache des Schaltzykluses des Umschaltvorgangs des den Draht erwärmenden Stroms, zu mitteln.

3. WIG-Schweißapparatur mit erwärmten Zuführdraht nach Anspruch 1, dadurch gekennzeichnet, daß die elektrische Leistungsversorgung (4, 51) zur Erzeugung eines WIG-Lichtbogens einen gepulsten Schweißstrom abgibt; ein Schaltvorgang, der zwischen der elektrischen Leistungsversorgung des WIG-Lichtbogens unde der den Draht erwärmenden Leistungsversorgung (28, 41 und 56) durchgeführt wird, wobei die Vergleichs- und Regelvorrichtung das Schalterbauteil die Zufuhr des den Draht erwärmenden Stroms unterbrechen läßt, wenn der Schweißstrom sein Maximumsniveau annimmt, die besagte Vergleichs- und Kontrollvorrichtung regelt die Zeitdauer der elektrischen Leistungszuführung durch das Schaltbauteil nur, wenn der Schweißstrom einen Basiswert annimmt.

4. WIG-Schweißapparatur mit erwärmten Zuführdraht nach Anspruch 1, dadurch gekennzeichnet, daß besagte Schaltung ein Schalten mit 10 Hz oder höherer Frequenz zwischen dem Schweißstrom und dem den Draht erwärmenden elektrischen Strom kontinuierlich bewirkt; der besagte Schaltkreis enthält eine Vorrichtung zur periodischen Änderung eines mittleren Schweißstroms mit einer Frequenz bis zu 4 Hz.

5. WIG-Schweißapparatur mit erwärmten Zuführdraht nach Anspruch 1, dadurch gekennzeichnet, daß das Schalterbauteil aus einem Halbleiter-Wechselspannungsschalter (54) besteht, um eine Phasenregelung der den Draht erwärmenden elektrischen Energieversorgung zu bewirken, wobei besagte Vergleichs- und Regelvorrichtung den Halbleiter-Wechselstromschalter so regelt, daß eine elektrische Energieversorgung über einen Zeitraum kürzer als 3/4π, bezogen auf jede Halbwelle des den Draht erwärmenden elektrischen Stroms, erfolgt.

6. WIG-Schweißapparatur mit erwärmten Zuführdraht nach Anspruch 5, gekennzeichnet durch, daß eine weitere Vorrichtung (59, 60), um eine Gleichrichtung aller wellenartigen den Draht erwärmenden Ströme in den Draht erwärmenden Gleichstrom zu bewirken.

7. WIG-Schweißapparatur mit erwärmten Zuführdraht nach Anspruch 1, dadurch gekennzeichnet, daß eine gemeinsame elektrische Leistungsversorgung für beide, die den Draht erwärmende elektrische Leistungsversorgung und die elektrische Leistungsversorgung des WIG-Schweißbogens benutzt wird; eine Stromschaltung, die parallel zum WIG-Brenner geschaltet ist und in welcher das Schalterbauteil (31) in Reihe zu dem Draht angeordnet ist, wobei besagte Vergleichs- und Regelvorrichtung (33) das Schalterbauteil periodisch in jedem Zyklus (T) einschaltet, um so den Versorgungsstrom zu dem Draht abzuzweigen, wobei besagte Vergleichs- und Regelvorrichtung die Zeitdauer (TW) des so abgezweigten, den Draht erwärmenden Stroms regelt, so daß die den Draht erwärmende elektrische Leistung geregelt ist.

8. WIG-Schweißapparatur mit erwärmten Zuführdraht nach Anspruch 7, dadurch gekennzeichnet, daß die Vorrichtung in Kombination mit einer Rückkoppelungsregelung benutzt wird, ausgelegt ist, um eine Rückkoppelung ders Versorgungsstroms der besagten konstantstromtypartigen Schweißstromversorgung so zu bewirken, daß ein konstanter mittlerer Schweißstrom erzeugt wird.

9. WIG-Schweißapparatur mit erwärmten Zuführdraht nach Anspruch 7, gekennzeichnet, durch, ein weiteres Schaltbauteil (32) parallel zum WIG-Schweißbrenner, wobei die Vergleichs- und Kontrolleinrichtung (33) das erste Schalterbauteil (31) periodisch einschaltet, um so den elektrischen Versorgungsstrom zu dem Draht abzuzweigen und um dann das zweite Schalterbauteil (32) einzuschalten, um so die elektrische Leistungszufuhr zu dem Draht zu unterbrechen, um so die Zeitdauer für die den Draht erwärmende elektrische Leistung zu regeln.

## Revendications

1. Dispositif de soudage TIG à fil chaud comportant une source d'énergie électrique (4; 51) en vue de créer un arc TIG, une autre source d'énergie électrique (28; 41; 56) pour délivrer un courant électrique de chauffage de fil à un fil en effectuant alternativement à la fois la délivrance et une interruption d'énergie électrique de manière à chauffer le fil, un chalumeau à arc TIG (1), et des moyens (7; 7 et 57) pour délivrer le fil, caractérisé par des moyens de commande possédant:

des moyens (22 et 23; 43; 58) pour délivrer un signal électrique proportionnel à la vitesse d'avancement du fil;

des moyens de détection (25; 35, 36 et 43; 35, 36 et 58) en vue de détecter un courant électrique de fil et une tension de fil pour détecter une puissance électrique instantanée de chauffage de fil, lesdits moyens de détection délivrant un signal électrique correspondant à la puissance instantanée détectée de chauffage du fil; et

des moyens de commande et de comparaison (27, 43, 55 et 58) et un élément de commutation (31, 42 et 54) prévus dans un circuit d'alimentation d'énergie électrique de chauffage de fil, lesdits moyens de commande et de comparaison comparant le signal électrique de la puissance électrique instantanée de chauffage de fil au signal électrique proportionnel à la vitesse d'avancement du fil de manière à commander la durée d'alimentation d'énergie électrique par l'intermédiaire de l'élément de commutation en fonction de résultat de la comparaison de sorte que la puissance électrique de chauffage de fil corresponde à la vitesse d'avancement du fil, d'alimentation du courant de chauffage du fil étant interrompue lorsque le courant d'arc atteint un niveau de crête, le courant de chauffage de fil étant délivré

# EP 0 139 249 B1

lorsque le courant d'arc atteint un niveau minimum; la durée d'alimentation de courant de chauffage de fil n'étant pas plus longue que la durée du courant minimal d'arc.

2. Dispositif de soudage TIG à fil chaud selon la revendication 1, dans lequel les moyens de comparaison et de commande (27, 33 et 58) comprennent un circuit de moyenne pour effectuer la moyenne du signal électrique de la puissance électrique instantanée de chauffage du fil en utilisant une constante de temps non inférieure à trois fois la période de commutation de la commutation du courant de chauffage du fil.

3. Dispositif de soudage TIG à fil chaud selon la revendication 1, dans lequel la source d'énergie électrique (4, 51) pour créer un arc TIG délivre en sortie un courant d'arc pulsé, une commutation étant effectuée entre la source d'énergie électrique de l'arc TIG et la source d'énergie de chauffage du fil (28, 41 et 56), les moyens de comparaison et de commande amenant l'élément de commutation à couper l'alimentation du courant de chauffage du fil lorsque le courant d'arc se trouve à un niveau de crête, lesdits moyens de comparaison et de commande commandant la durée d'alimentation d'énergie électrique par l'intermédiaire de l'élément de commutation seulement lorsque le courant d'arc est d'intensité minimum.

4. Dispositif de soudage TIG à fil chaud selon la revendication 1, dans lequel ledit circuit de commutation effectue une commutation permanente de 10 Hz ou plus en fréquence entre le courant d'arc et le courant électrique de chauffage du fil, ledit circuit de commutation comportant des moyens pour modifier périodiquement un courant d'arc moyen à une fréquence non supérieure à 4 Hz.

5. Dispositif de soudage TIG à fil chaud selon la revendication 1, dans lequel l'élément de commutation est un commutateur en alternatif à semiconducteurs (54) pour effectuer une commande de la phase d'alimentation de l'énergie électrique de chauffage du fil, lesdits moyens de comparaison et de commande commandant le commutateur en alternatif à semiconducteurs de sorte qu'une alimentation électrique d'une période inférieure à $3\pi/4$ soit assurée par rapport à chaque demi-onde du courant électrique de chauffage du fil.

6. Dispositif de soudage TIG à fil chaud selon la revendication 5, comprenant en outre des moyens (59, 60) pour effectuer un redressement de toutes les ondes du courant de chauffage de fil en courant continu de chauffage de fil.

7. Dispositif de soudage TIG à fil chaud selon la revendication 1, dans lequel une source d'énergie électrique commune est utilisée pour à la fois la source d'énergie électrique de chauffage du fil et la source d'énergie électrique d'arc TIG, un circuit étant prévu qui est relié en parallèle au chalumeau à arc TIG et dans lequel l'élément de commutation (31) est relié en série au fil, lesdits moyens de comparaison et de commande (33) amenant l'élément de commutaton à être périodiquement fermé pendant chaque cycle (T) pour ainsi dériver le courant électrique de sortie vers le fil, lesdits moyens de comparaison et de commande commandant la durée (TW) du courant de chauffage de fil dérivé de manière à commander l'énergie électrique de chauffage du fil.

8. Dispositif de soudage TIG à fil chaud selon la revendication 7, dans lequel le dispositif est utilisé en combinaison avec un organe de commande à rétroaction apte à effectuer une rétroaction du courant de sortie à partir de ladite source d'énergie de soudage du type à courant constant de manière à délivrer un courant d'arc moyen constant.

9. Dispositif de soudage TIG à fil chaud selon la revendication 7, comportant en outre un autre élément de commutation (32) prévu en parallèle sur le chalumeau à arc TIG, les moyens de comparaison et de commande (33) amenant le premier élément de commutation (31) à être périodiquement fermé pour ainsi dériver le courant électrique de sortie vers le fil et ensuite amenant le second élément de commutation (32) à être fermé pour ainsi interrompre l'alimentation d'énergie électrique au fil de manière à commander la durée d'alimentation d'énergie électrique de chauffage du fil.

# FIG. 1

# FIG. 2

# FIG. 3

# FIG. 4

2

# F I G. 5

# F I G. 6

## FIG. 7

## FIG. 8

FIG. 9

FIG. 10

FIG. 11

FIG. 12

## F I G. 13

## F I G. 14

EP 0 139 249 B1

F I G. 15

F I G. 16

9

# F I G. 17